# EUROPÄISCHE PATENTANMELDUNG

(11) **EP 2 273 206 A2**
(43) Veröffentlichungstag der Anmeldung: **12.01.2011**
(21) Anmeldenummer: 10165015.8
(22) Anmeldetag: 04.06.2010
(51) Int. Cl.: F24D 3/14, F24D 3/16

(54) **Flächenelement**

(30) Priorität: 04.06.2009 DE 102009025920
(71) Anmelder: Schlegel, Thomas, 8596 Scherzingen (CH)
(72) Erfinder: Schlegel, Thomas, 8596 Scherzingen (CH)
(74) Vertreter: Lang, Christian

(57) **Zusammenfassung**

Die vorliegende Erfindung betrifft ein Flächenmodul mit einem plattenartigen Körper, bei dem die Länge und Breite zur Bildung einer Hauptfläche sehr viel größer ausgebildet ist als die der anderen Längserstreckung der Stirnseiten entsprechende Dicke, und wobei in dem Körper mindestens eine Leitung zur Durchleitung eines Fluids ausgebildet ist, die sich entlang der Hauptfläche erstreckt, wobei das Flächenmodul an mindestens einer Stirnseite Verbindungsmitteln zum form- und/oder kraftschlüssigen Verbinden mit einem weiteren Flächenmodul aufweist. Die Erfindung betrifft außerdem ein System mit mehreren Flächenmodulen die zusammen zu einer Heiz- oder Kühlfläche verbunden werden können, sowie die Verwendung der Flächenmodule zur Bildung von Heiz- und / oder Kühlflächen an Wänden, Decken oder Böden von Gebäuden, insbesondere zur Nachrüstung von Fußbodenheizungen in Altbauten unter Ausnutzung vorhandener Anschlüsse von Warmwasserheizkörpern.

## Beschreibung

### GEBIET DER ERFINDUNG

Die vorliegende Erfindung betrifft ein Flächenmodul mit einem plattenartigen Körper, bei dem die Länge und Breite zur Bildung einer Hauptfläche sehr viel größer ausgebildet sind als die der anderen Längserstreckung der Stirnseite entsprechende Dicke, und wobei in dem Körper mindestens eine Leitung zur Durchleitung eines Fluids ausgebildet ist, die sich entlang der Hauptfläche erstreckt. Außerdem betrifft die Erfindung ein System aus derartigen Flächenmodulen sowie die Verwendung derartiger Flächenmodule zur Bildung von Heiz-und/oder Kühlsystemen, insbesondere zur Nachrüstung von Fußbodenheizungen in Altbauten.

### STAND DER TECHNIK

Aus dem Stand der Technik sind Zentralheizungen mit Warmwasserheizkörpern bekannt, bei denen von einer Heizeinrichtung das in dem Heizsystem zirkulierende Wasser aufgeheizt und in entsprechende Warmwasserheizkörper transportiert wird, wo das Warmwasser seine Wärme an die Umgebungsluft abgibt.

Außerdem sind seit langem Fußbodenheizungen bekannt, bei denen durch im Fußboden verlegte Heizschlangen ebenfalls ein entsprechend erhitztes Heizmedium, wie Wasser oder dergleichen, durchgeleitet wird, um die Wärme an den Boden und den darüberliegenden Raum abzugeben. Entsprechende Systeme sind auch als Flächenheizungen für Wand und Decke und/oder für die Kühlung von Räumen bekannt.

In modernen Wohngebäuden kommen auf Grund der veränderten Heiztechnik, die lediglich niedrige Maximaltemperaturen des Heizmediums zur Verfügung stellt, immer mehr Flächenheizungen, wie Fußbodenheizungen zum Einsatz, die bei entsprechend niedrigen Temperaturen des Heizmediums genutzt werden können. Da die modernen Heizsystemen, wie z.B. Wärmepumpen, die mit niedrigen Maximaltemperaturen des Heizmediums arbeiten, sehr energieeffizient sind, besteht ein Interesse diese auch bei Altbauten einzusetzen, bei denen herkömmliche Heizsystem mit Warmwasserheizkörpern vorhanden sind, um die Energieeffizienz auch in diesem Altbauten nutzen zu können.

Allerdings ist der nachträgliche Einbau einer bekannten Fußbodenheizung mit einem sehr hohen Aufwand verbunden, da das Verlegen der Heizschlangen das Entfernen des Fußbodenbelags und auch einer darunter angeordneten Estrichschicht und das Neugießen eines Estrichs über die verlegten Heizschlangen erfordert. Dies ist jedoch in den meisten Fällen wirtschaftlich nicht sinnvoll.

### OFFENBARUNG DER ERFINDUNG

### AUFGABE DER ERFINDUNG

Es ist deshalb Aufgabe der vorliegenden Erfindung eine Möglichkeit zu schaffen, so dass eine Nachrüstung von Altbauten mit bestehenden Warmwasserheizsystemen mit einer entsprechenden Fußbodenheizung technisch und wirtschaftlich sinnvoll durchführbar wird. Insbesondere soll eine entsprechende Nachrüstung ohne großen Aufwand und mit möglichst geringem Eingriff in die vorhandene Bausubstanz möglich sein. Darüber hinaus soll die Erfindung auch ein einfaches, aber zugleich sicheres und die Erfordernisse von Flächenheizungen und/oder -kühlungen erfüllendes System bereitstellen, mit dem in einfacher Weise die Realisierung von Flächenheizungen und/oder Kühlungen möglich sind.

### TECHNISCHE LÖSUNG

Diese Aufgabe wird gelöst mit einem Flächenmodul mit den Merkmalen des Anspruchs 1, einem System welches mehrere Flächenmodule umfasst mit den Merkmalen des Anspruchs 14 sowie einer Verwendung der Flächenmodule mit den Merkmalen des Anspruchs 15. Vorteilhafte Ausgestaltungen sind Gegenstand der abhängigen Ansprüche.

Die Erfindung geht aus von der Erkenntnis, dass eine einfache Möglichkeit zur Schaffung von Flächenheizungen und/oder -Kühlungen, insbesondere zur Nachrüstung als Fußbodenheizung in bestehenden Gebäuden dann möglich ist, wenn zusammensetzbare Flächenmodule in Form plattenartiger Körper bereit gestellt werden, die mindestens eine Leitung zur Durchleitung eines Fluids, also eines Heizmediums aufweisen. Diese Module können dann zu größeren Flächenanordnungen zusammengesetzt werden. Der plattenartige Körper, der eine sehr viel größere Länge und Breite im Vergleich zu seiner Dicke aufweist, bietet die Möglichkeit, Bodenbeläge in Altbauten zu ersetzen, wie beispielsweise Teppichböden, Parkettböden, Laminatböden, PVC usw., und gleichzeitig beim Ersetzen des Bodenbelags eine Fußbodenheizung vorzusehen. Darüber hinaus können die flachen, plattenartigen Flächenmodule auch als Dekorationselemente bzw. Beläge an Decken und Wänden vorgesehen werden bzw. auch bei der Verwendung im Bodenbereich mit entsprechenden Dekoren versehen werden.

Dadurch dass sich die Fluidleitung für das Heizmedium vorzugsweise mit vielen Windungen entlang der Hauptfläche des plattenartigen Körpers, die durch die Länge und Breite des Flächenmoduls definiert ist, erstreckt, kann durch Durchleiten von im Vergleich zur Umgebung kälterer oder wärmerer Fluide eine entsprechende Heiz- und/oder Kühlwirkung erzielt werden.

Um mit den Flächenmodulen entsprechend große Flächen mit Heiz- und/oder Kühlwirkung schaffen zu können, weisen die Flächenmodule erfindungsgemäß Verbindungsmittel an den Stirnseiten zum form- und/oder kraftschlüssigen Verbinden mit weiteren Flächenmodulen auf. Dadurch kann in einfacher Weise eine entsprechende Flächenheiz- und/oder Kühlanordnung geschaffen werden, in dem die Flächenmodule in einem Baukastensystem zusammengesetzt werden.

Die Verbindungsmittel können hierbei an allen Stirnseiten des Flächenmoduls oder nur an zwei Stirnseiten beispielsweise gegenüberliegenden Stirnseiten. d. h. an den voneinander wegweisenden Stirnseiten, vorgesehen werden oder an zwei benachbarten Stirnseiten. In einem System derartiger Flächenmodule können auch unterschiedliche Flächenmodule, also beispielsweise Flächenmodule mit Verbindungsmitteln an vier Stirnseiten bzw. allen Stirnseiten sowie Flächenmodule mit lediglich zwei Seiten mit Verbindungsmitteln, die benachbart zueinander sind oder einander gegenüberliegen, vorgesehen sein, um durch die verschiedenen Flächenmodule eine große Variabilität der Verbindungsmöglichkeiten zu schaffen und allen Anforderungen beim Verlegen, beispielsweise einer Fußbodenheizung gerecht zu werden.

Die Verbindungsmittel können insbesondere an einem Flächenmodul komplementär zueinander ausgebildet sein, so dass bei gleicher Ausrichtung mehrerer Flächenmodule diese Flächenmodule miteinander verbunden werden können. Hierbei können die komplementären Verbindungsmittel jeweils an einer Seite des Flächenmoduls oder jeweils an jeder Seite mit vorgesehen sein, wobei hier dann wieder eine entsprechende komplementäre Anordnung der Verbindungsmittel gewählt werden kann.

Die Verbindungsmittel können durch Vorsprünge und Aussparungen mit oder ohne Hinterschneidungen sowie durch Haken mit Aufnahmen gebildet werden. Auch elastische Spreizelemente mit oder ohne Hinterschneidungen und entsprechende Aufnahme sind denkbar. Insbesondere können Verbindungsmittel vorgesehen werden, die so geformt sind, dass sie bei der Verbindung der Flächenmodule eine gegenseitige Anpresskraft der Flächenmodule erzeugen. Dies kann beispielsweise durch eine entsprechende elastische Verspannung der Verbindungsmittel erzeugt werden. Insbesondere können die Verbindungsmittel als sogenannte Clip- oder Clickelemente ausgeführt sein, bei denen die Verbindungsmittel gegenseitig so ausgebildet sind, dass sie verrasten und durch Hinterschneidungen oder elastische Spreizelemente in ihrer Position gehalten werden. Die formschlüssige Ausbildung der Verbindungselemente kann hierbei bewirken, dass die Verbindungen in einfacher und leichter Weise, ohne dass etwas falsch zusammengefügt werden kann, erfolgen können, wobei zum Schluss beim Zusammenfügen eine entsprechende elastische Verformung der Verbindungselemente erfolgen, die dann durch die Hinterschneidungen oder elastischen Spreizelemente oder dergleichen bzw. Ratselemente aufrecht erhalten wird und zur gegenseitigen Anpressung der Flächenmodule zueinander führt.

Die Verbindungselemente können gleichmäßig entlang der Stirnseiten verteilt sein und insbesondere über die gesamten Stirnseiten angeordnet sein, so dass es eine gleichmäßige Verbindung der Flächenmodule ergibt, oder aber nur in bestimmten Bereichen vorgesehen sein.

Die Fluidleitung des Flächenmoduls kann, wie bereits oben erwähnt, schleifenförmig oder mäanderförmig bzw. in Form einer Schlange in dem Flächenmodul vorgesehen sein, wobei die Leitungsrichtung zum Großteil parallel zu den Stirnseiten geführt sein kann.

Die Fluidleitung kann mehrere Ein- und/oder Auslassöffnungen, mindestens jedoch zwei für den Ein- und Auslass des Heizmediums. Die Ein- und/oder Auslassöffnungen können an verschiedenen Stirnseiten des Flächenmoduls angeordnet sein. Insbesondere können an gegenüberliegenden bzw. parallelen Stirnseiten und/oder angrenzenden Stirnseiten die Ein-und/oder Auslassöffnungen vorgesehen sein. Darüber hinaus können auch an allen Stirnseiten entsprechende Ein- und/oder Auslassöffnungen vorgesehen sein, die bei Bedarf, also wenn die Öffnungen nicht verwendet werden sollen, durch entsprechende Verschlusselemente verschlossen werden können. Dadurch ergibt sich eine erhöhte Variabilität der Einsatzmöglichkeiten eines universellen oder einiger weniger unterschiedlicher, universell einsetzbarer Flächenmodule.

Die Ein- und/oder Auslassöffnungen können jeweils ein Dichtelement umfassen, wobei vorzugsweise jeweils nur an einer der zu verbindenden Ein- und/oder Auslassöffnungen ein entsprechendes Dichtelement vorgesehen ist, so dass auch die Dichtelemente an dem Flächenmodul komplementär im Bezug auf die Stirnseiten bzw. zu verbindende Flächenmodule verteilt sein können.

Das Dichtelement kann in einer Aussparung einer Stirnseite vorgesehen sein, die die entsprechende Ein- und/oder Auslassöffnung umlaufend umgibt, wobei das Dichtelement etwas über die Stirnseite bzw. die Aussparung hervorsteht, um beim Aneinanderpressen der Stirnseiten elastisch verspannt zu werden, so dass es eine Dichtwirkung zeigen kann.

Alternativ zu einem Dichtelement kann die Ein- und/oder Auslassöffnung auch durch eine umlaufende stoffschlüssige Verbindung abgedichtet werden. Hierzu können beispielsweise Einfüllkanäle für das Einfüllen von Kleb- oder Dichtstoffen oder sonstigen verbindenden und aushärtenden Materialien vorgesehen werden. Darüber hinaus ist es auch möglich die aneinander liegenden Flächenmodule teilweise an den Stirnseiten ringförmig miteinander zu verschweißen.

Zu diesem Zweck kann umlaufend um die Ein- und/oder Auslassöffnung ein Widerstandsheizdraht vorgesehen sein, wobei während und/oder nach dem Verbinden der benachbarten Flächenmodule, beispielsweise durch entsprechendes Einklipsen, die Anschlüsse des Widerstandsheizdrahtes beispielsweise von der Oberseite zugänglich sind und an eine Storm- und Spannungsquelle angeschlossen werden, um den Widerstandsheizdraht zu erhitzen und so das umliegende Material, beispielsweise Kunststoff, des Flächenmoduls aufzuschmelzen. Durch die Verbindungsmittel zwischen de Flächenmodulen wird ein Anpressdruck an den Stirnseiten erzeugt, sodass aufgrund der Wärme, die durch den Widerstandsheizdraht erzeugt wird, die Flächenmodule an den Stirnseiten ringförmig umlaufend um die Ein- und/oder Auslassöffnungen verschweißt werden können. Neben einer nachträglichen Aufheizung nach Verbinden der Flächenmodule kann eine Aufheizung auch gleichzeitig während des Verbindens der Flächenmodule vorgenommen werden, sodass erst bei einem entsprechend aufgeschmolzenen Material an der Stirnseite die endgültige Verbindungsposition der Flächenmodule erreichbar ist.

Um die Ausbildung einer Schweißverbindung zu unterstützen, können Schweißwülste um die Ein- und/oder Auslassöffnung vorgesehen sein, welche das aufzuschmelzende Material zur Verfügung stellen. Entsprechend können gegenüberliegend komplementär Schweißnuten vorgesehen sein, in die das aufgeschmolzene Material einfließen kann.

Darüber hinaus können die Stirnseiten zumindest teilweise entlang der Längs- oder Breitenrichtung und/oder entlang der Dickenrichtung schräg oder unter einem Winkel von 30° bis 60°, insbesondere 45° zur Oberseite des Flächenmoduls ausgebildet sein. Insbesondere kann der schräge Bereich der Stirnseiten im Bereich der Einlass- und/oder Auslassöffnung mit einer dort vorzusehenden stoffschlüssigen Verbindung der Flächenmodule angeordnet sein. Die schräge Ausbildung der Stirnseiten ermöglicht insbesondere auch im Falle einer Schweißverbindung der Flächenmodule um die Einlass- und/oder Auslassöffnungen herum eine besonders enge und spaltfreie oder nahezu spaltfreie Anordnung der Flächenmodule zueinander, da aufgrund der schrägen Ausbildung der Stirnseiten komplementär zueinander eine entsprechende Annäherung der Bereiche der Flächenmodule beim Verschweißen möglich wird.

Die erfindungsgemäßen Flächenmodule sind insbesondere so gestaltet, dass sie in mindestens eine, vorzugsweise zwei oder mehr, insbesondere alle vier Richtungen bzw. Seiten eines quadratischen oder rechteckigen Flächenmoduls oder entsprechend an einer, zwei oder mehr oder an allen Seiten anders geformter Flächenmodule erweiterbar sind, so dass eine entsprechende Flächenheizung- und/oder Kühlung darstellbar ist.

Wie bereits erwähnt, können die Flächenmodule nicht nur quadratisch oder rechteckig sein, sondern vielmehr auch trapezförmig, dreieckig oder mehreckig, wenn die Hauptfläche mit der Längserstreckung und der Breitenerstreckung betrachtet wird.

Wie ebenfalls bereits erwähnt, sollen die Flächenmodule möglichst flach ausgebildet sein, um vielfältig eingesetzt werden zu können, insbesondere bei der Nachrüstung von Fußbodenheizungen in Altbauten. Entsprechend kann die Dicke des Flächenmoduls kleiner oder gleich 5 cm, insbesondere kleiner oder gleich 2 cm, vorzugsweise kleiner oder gleich 1,5 cm sowie höchst vorzugsweise kleiner oder gleich 1 cm sein.

Ein entsprechendes Flächenmodul kann in vorteilhafter Weise aus zwei Teilen gefertigt werden, nämlich einerseits einem Bodenkörper und andererseits einem Deckel. So kann der Bodenkörper mit einer Fluidleitung mit einer nach oben offenen Seite versehen sein, die durch den Deckel dicht verschlossen wird.

Der Deckel kann mit dem Bodenkörper stoffschlüssig verbunden werden, wobei beispielsweise die Verbindung über eine Klebeverbindung oder eine Schweißverbindung hergestellt werden kann.

Als Schweißverfahren kommen insbesondere das Ultraschweißverfahren in Betracht, aber auch Reibschweißverfahren oder Laserschweißverfahren.

Als Werkstoffe für das Flächenmodul oder Teile davon kommen verschiedene Metalle, insbesondere Aluminium oder Stahl, Metalllegierungen, Aluminiumlegierungen, Stahllegierungen oder auch Kunststoffe, wie insbesondere Duroplaste, Polypropylen, Acrylbutadienstyrol, Melamin- oder Phenolharzgetränkte Papiere (Laminate) oder Kombinationen davon in Frage. Darüber hinaus können auch Werkstoffe wie Glas, Keramik, Naturstein oder Faserverbundwerkstoffe zum Einsatz kommen. Sämtliche Werkstoffe können sowohl für den Bodenkörper als auch für den Deckel zum Einsatz kommen. Die Verwendung der einzelnen Werkstoffe hängt von der Herstellbarkeit der entsprechenden Komponenten und dem geforderten Eigenschaftsprofil ab. Beispielsweise kann der Bodenkörper aus einem Kunststoff durch Spritzgusstechnik hergestellt werden, während der Deckel aus einem Metall oder einem der anderen Werkstoffe geformt ist.

Der Deckel kann insbesondere ein Dekor aufweisen oder mit einem Dekor versehen werden, so dass gestalterische Möglichkeiten für die Verwendung der Flächenmodule gegeben sind. Insbesondere kann das Dekor beispielsweise entsprechende Dekore, wie Parkettnachbildungen oder dergleichen aufweisen.

Statt das Dekor direkt auf dem Flächenmodul bzw. insbesondere einem Deckel des Flächenmoduls vorzusehen, kann eine separate Dekorplatte auf der Oberseite des Flächenmoduls angeordnet werden. Die Dekorplatte kann abnehmbar ausgebildet sein, sodass das Dekor leicht ausgewechselt werden kann. Insbesondere können die lösbaren Verbindungselemente einerseits an dem Flächenmodul und andererseits an der Dekorplatte so ausgebildet sein, dass die Dekorplatte in verschiedenen Orientierungen, also beispielsweise um 90 Grad verdreht auf dem Flächenmodul angeordnet werden kann. Auf diese Weise lassen sich vielfältige Gestaltungen erzielen. Darüber hinaus kann die Dekorplatte so ausgebildet sein, dass sie zwei, drei oder mehr Flächenmodule überdeckt.

Gemäß der Erfindung umfasst ein entsprechendes System eine Vielzahl von identischen und/oder unterschiedlichen Flächenmodulen, die zusammen zu einer entsprechend großflächigen Flächenheizung und/oder -kühlung eingesetzt werden können.

Insbesondere kann das System zwei, drei, vier oder mehr unterschiedliche Typen an Flächenmodulen umfassen, um auf verschiedene Anforderungsprofile eingehen zu können oder die Verlegung zu vereinfachen. Darüber hinaus ist es jedoch vorteilhaft eine möglichst geringe Anzahl unterschiedlicher Typen an Flächenmodulen zu haben, um die Lagerhaltung in dem System so gering wie möglich zu halten.

Insbesondere können in dem System Randflächenmodule vorgesehen sein, bei denen vor allem die Ränder ohne Verbindungsmittel ausgestattet sind und durch die entsprechende Anordnung der Fluidleitung die Gewährleistung einer sicheren Weiterleitung des Fluids gegeben ist.

Die Flächenmodule können auch entsprechende Aussparungen oder Öffnungen quer zur Hauptfläche aufweisen, beispielsweise um als Durchführungen für Bauteile am Boden, Wänden oder Decke zur Verfügung zu stehen. Beispielsweise könnten bei einer Verwendung der Flächenmodule an der Decke entsprechende Öffnungen oder Aussparungen für die Durchführung von Deckenauslässen, also elektrischen Leitungen zur Anordnung von Lampen und dergleichen vorgesehen sein. Die entsprechenden Aussparungen oder Öffnungen können beliebige geometrische Formen aufweisen, von kreisrunden Querschnitten über quadratisch, rechteckig, dreieckig, vieleckig bis zu beliebigen Freiformen.

Ein entsprechendes System bzw. die darin enthaltenen Flächenmodule können insbesondere zur Bildung von Heiz- und/oder Kühlflächen an Wänden, Decken oder Böden und insbesondere zur Nachrüstung von Fußbodenheizungen eingesetzt werden, wobei im letzteren Fall die bestehenden Warmwasserkreisläufe bekannter Heizungssysteme in einfacher Weise an die Flächenmodule angeschlossen werden können. Hierbei muss lediglich ein Anschluss des Heizmedienzulaufs und -ablaufs vorgenommen werden, was beispielsweise in einfacher Weise durch Zu- und Abläufe für bestehende Warmwasserheizkörper ermöglicht wird. Hierzu werden die Zu- und Abläufe bodennah jeweils mit einer Ein- und einer Auslassöffnung einer Anordnung aus Flächenmodulen verbunden.

### KURZBESCHREIBUNG DER FIGUREN

Weitere Vorteile, Kennzeichen und Merkmale der vorliegenden Erfindung werden bei der nachfolgenden detaillierten Beschreibung eines Ausführungsbeispiels anhand der beigefügten Zeichnungen deutlich. Die Zeichnungen zeigen hierbei in rein schematischer Weise in
- Figur 1: eine perspektivische Darstellung eines erfindungsgemäßen Flächenmoduls, wobei das unter dem Deckel des Flächenmoduls Angeordnete strichliniert dargestellt ist;
- Figur 2: eine Draufsicht auf das Flächenmodul aus Figur 1, wobei wiederum das, was unter dem Deckel angeordnet ist, strichliniert dargestellt ist;
- Figur 3: eine Schnittansicht durch das Flächenmodul entsprechend der Schnittlinie A-A aus Figur2; und in
- Figur 4: eine perspektivische Darstellung des Bodenkörpers des Flächenmoduls aus den Figuren 1 bis 3,
- Figur 5: eine perspektivische Darstellung einer weiteren Ausführungsform eines erfindungsgemäßen Flächenmoduls;
- Figur 6: einen Teilquerschnitt durch ein erfindungsgemäßes Flächenmodul im Bereich einer Einlass- und/oder Auslassöffnung.

### AUSFÜHRUNGSBEISPIEL

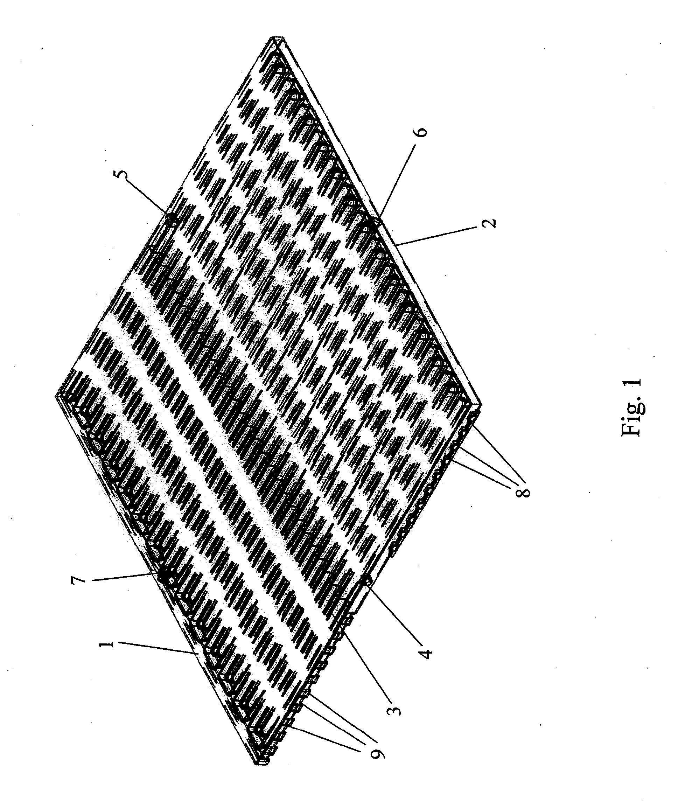

Die Figur 1 zeigt ein Ausführungsbeispiel eines erfindungsgemäßen Flächenmoduls mit einem Deckel 1 und einem Bodenkörper 2. Das Flächenmodul ist als quadratische Platte ausgebildet, wobei die Dicke des Flächenmoduls sehr viel kleiner ist als die Länge und Breite. Allerdings ist die Erfindung nicht auf die Ausführungsform mit einer quadratischen Ausbildung der plattenartigen Struktur, wie sie in der Figur 1 dargestellt ist, beschränkt, sondern die Länge und Breite kann genauso wie die Form in der Draufsicht auf die Platte unterschiedlich gewählt werden, so dass quadratische, dreieckige, rechteckige, trapezförmige, sechseckige oder sonstige Form möglich sind.

Das Flächenmodul weist an jeder Seite eine Öffnung 4, 5, 6, 7 auf, die in Verbindung mit einem oder mehreren Kanälen bzw. Fluidleitungen 3 steht, die mäanderförmig bzw. schlangenförmig in dem Flächenmodul angeordnet sind. Die mindestens eine Fluidleitung 3 dient zur Durchleitung eines Fluids, also beispielsweise einer Flüssigkeit, wie Wasser, oder einem entsprechenden Gas, wie Kalt- oder Heißluft. Durch die Durchleitung entsprechender Fluide, die wärmer oder kälter als die Umgebung sind, können die Flächenmodule als Heiz-und/oder Kühlkörper dienen.

An zwei Stirnseiten des Flächenmoduls der Ausführungsform, wie sie in der Figur 1 dargestellt ist, sind Verbindungsmittel 8, 9 vorgesehen, die zum gegenseitigen Verbinden von Flächenmodulen dienen. Durch das Verbinden mehrerer Flächenmodule können beliebig große Flächen, die zum Heizen und/oder Kühlen Verwendung finden können, gebildet werden. Die Verbindungsmittel 8, 9 bestehen aus Vorsprüngen 8 und Ausnehmungen 9, in die die Vorsprünge 8 eingreifen können. Entsprechend sind an gegenüberliegenden Stirnseiten des Flächenmoduls komplementäre Verbindungsmittel vorgesehen, also beispielsweise an der einen Stirnseite die entsprechenden Vorsprünge und an der anderen Stirnseite die dazu passenden Ausnehmungen. Bei dem gezeigten Ausführungsbeispiel der Figur 1 sind an den gegenüberliegenden Stirnseiten, an denen die Einlass- und/oder Auslassöffnungen 4, 5 angeordnet sind, jeweils komplementäre Verbindungsmittel 8, 9 in Form von Vorsprüngen und Ausnehmungen vorgesehen. Allerdings ist die Anordnung der unterschiedlichen Verbindungsmittel 8, 9 wiederum komplementär, so dass gegenüberliegende Stirnseiten unterschiedlicher Flächenmodule miteinander verbunden werden können. Bei dem gezeigten Ausführungsbeispiel der Figur 1 sind an der Stirnseite mit der Ein- und/oder Auslassöffnung 4 beispielsweise links von der Öffnung 4 Ausnehmungen 9 und rechts Vorsprünge 8 vorgesehen, während an der Stirnseite mit der Ein- und/oder Auslassöffnung 5 genau umgekehrt die Vorsprünge 8 und Ausnehmungen 9 angeordnet sind, also in der Darstellung der Figur 1 links von der Ein- und / oder Auslassöffnung 5 die Vorsprünge und rechts von der Ein- und / oder Auslassöffnung 5 die Ausnehmungen.

Die Verbindungsmittel sind dabei so ausgebildet, dass bei der Ausbildung der Verbindung benachbarter Flächenmodule eine Kraft erzeugt wird, beispielsweise durch entsprechende elastische Verspannung, die ein gegenseitiges Anpressen der Stirnseiten aufeinander zu bewirkt. Dadurch können die Ein- und/oder Auslassöffnungen 4 bzw. 5 benachbarter Flächenmodule dicht miteinander verbunden werden, indem beispielsweise an einer der Ein-und/oder Auslassöffnungen 4, 5 ein Dichtring angeordnet ist. Beispielsweise kann um die Ein- und/oder Auslassöffnung 4, 5 eine Ausnehmung umlaufend angeordnet sein, in der ein O-Ring angeordnet wird, der über die Stirnseite hervorsteht, so dass bei einem gegenseitigen Anpressen der Stirnseiten benachbarter Flächenmodule der O-Ring entsprechend gepresst wird und seine Dichtwirkung ausüben kann.

Bei der Ausführungsform, die in Figur 1 gezeigt ist, ist an der Stirnseite, an der die Ein-und/oder Auslassöffnung 6 vorgesehen ist, keine Anordnung von Verbindungsmitteln gezeigt. Ein derartiges Flächenmodul kann dazu dienen einen Randabschluss eines Flächenheiz-und/oder Kühlsystems zu bilden, wobei an dem Rand keine Anordnung eines benachbarten Flächenmoduls notwendig ist. Die Ein- und/oder Auslassöffnung 6 kann entsprechend zum Anschluss einer Zu- oder Ableitung für das Heiz- und/oder Kühlfluid dienen. Beispielsweise könnte eine flexible Zuleitung im Randbereich zwischen einer Mauer und dem abschließenden Flächenmodul der Figur 1 für einen Bodenbelag verlegt sein, die dann abschließend unter einer Abschlussleiste unsichtbar verschwinden kann.

Allerdings sind natürlich auch Flächenmodule denkbar und somit in einem entsprechenden System für die Herstellung von Wand- und/oder Flächenheiz- und/oder Kühlsystemen vorsehbar, die an allen Stirnseiten entsprechende Verbindungsmittel 8, 9 aufweisen.

Dagegen kann es auch Flächenmodule geben, die nicht an jeder Stirnseite, wie hier in der Figur 1 gezeigt, Ein- und/oder Auslassöffnungen 4, 5, 6, 7 aufweisen. Vielmehr ist es möglich lediglich an gegenüberliegenden Stirnseiten oder an benachbarten Stirnseiten entsprechende Ein- und/oder Auslassöffnungen 4, 5 bzw. 4, 6 oder 5, 7 vorzusehen.

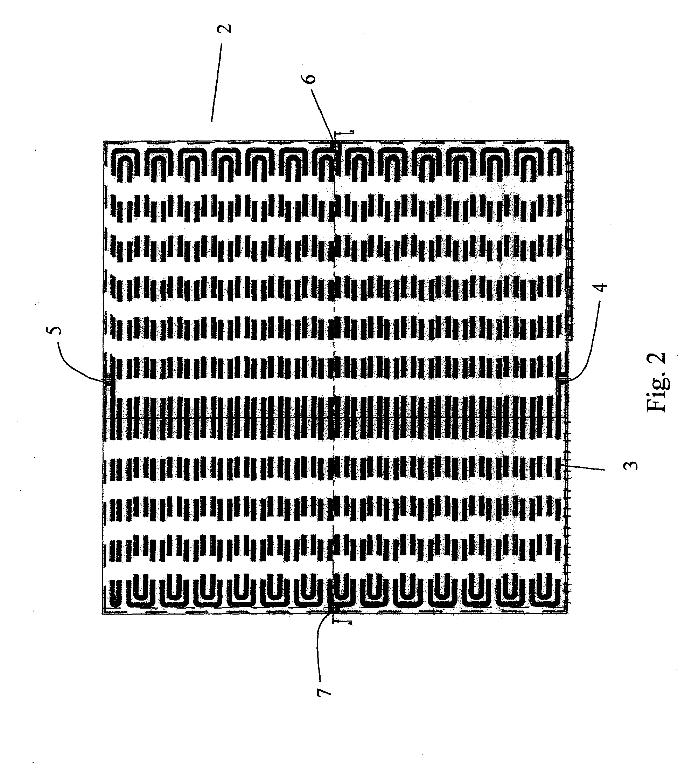

Die Figur 2 zeigt eine Draufsicht auf das Flächenmodul der Figur 1 bei welcher die schleifen- bzw. mäanderartige Form der Fluidleitung 3 zu erkennen ist.

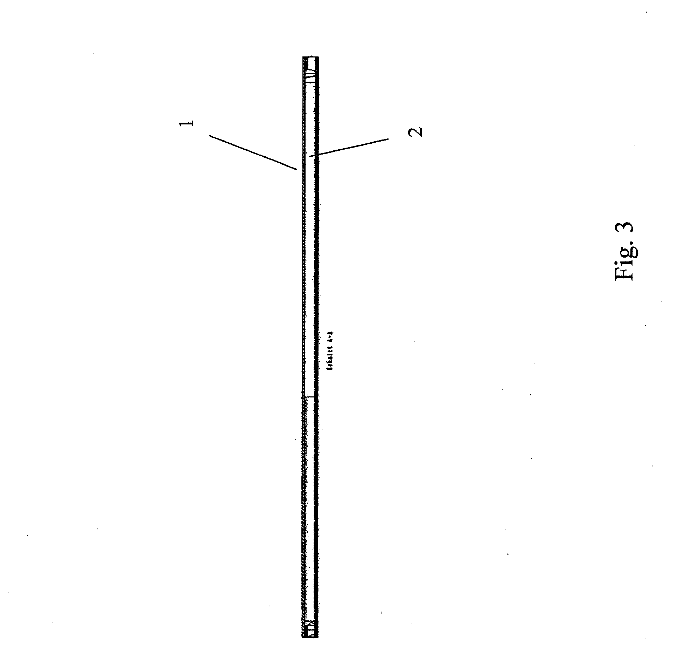

Die Figur 3 stellt eine Querschnittsansicht gemäß der Schnittlinie A-A aus Figur 2 dar. Hier ist zu erkennen, dass das Flächenmodul aus Komponenten zusammengesetzt ist und zwar aus einem Deckel 1, der in Form einer flachen, ebenen Platte vorliegt, sowie aus einem Bodenkörper 2, in dem sowohl die Fluidleitung 3 mit nach oben offener Ausgestaltung als auch die Verbindungsmittel 8, 9 ausgebildet sind. Die Bodenplatte 2 kann beispielsweise durch Kunststoffspritzguss hergestellt werden. Der Deckel 1 wird dann durch eine stoffschlüssige Verbindung auf dem Bodenkörper 2 angeordnet und verschließt die Fluidleitung 3. Als stoffschlüssige Verbindung kann eine Klebeverbindung oder eine Schweißverbindung, insbesondere eine Ultraschallschweiß-, Reibschweiß- oder Laserschweißverbindung vorgesehen werden.

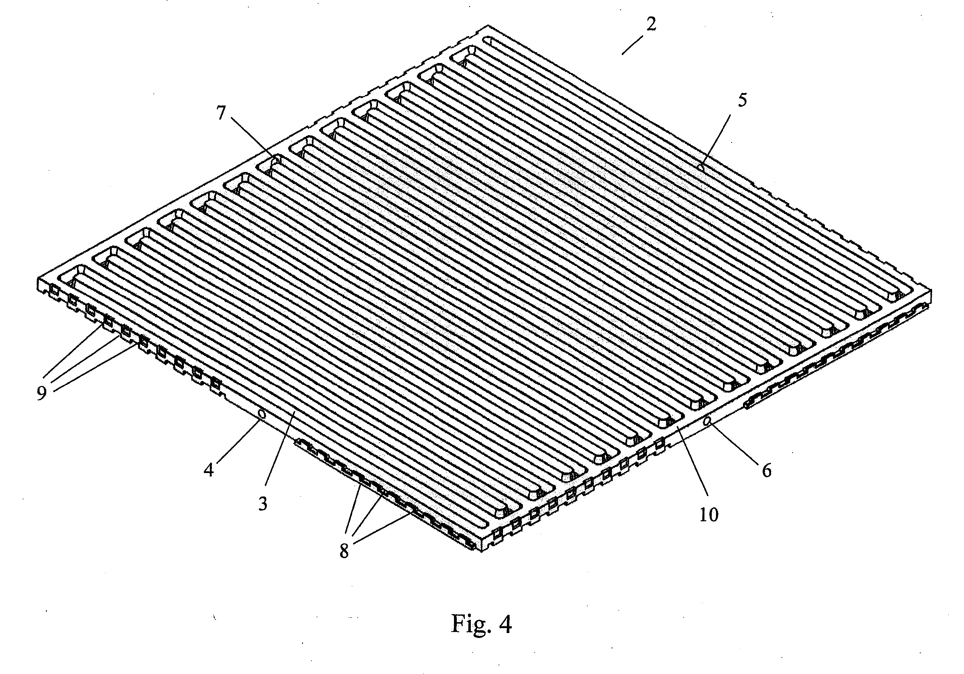

Die Figur 4 zeigt den Bodenkörper 2 in einer perspektivischen Darstellung, wobei hier wiederum die mäanderartige Struktur der Fluidleitung 3 gemäß dem Ausführungsbeispiel der Figuren 1 bis 3 zu sehen ist. Darüber hinaus kann erkannt werden, dass die Fluidleitung 3 in dem Bodenkörper 2 bereits soweit vorgeformt ist, dass lediglich die Oberseite noch geöffnet ist, während die Boden- und Wandbereiche der Fluidleitung 3 bereits im Bodenkörper 2 ausgebildet sind. Durch das Aufbringen eines Deckels 1 wird die Fluidleitung auch an der Oberseite verschlossen. Als Verbindungsstelle dient die Auflagefläche 10, die mittels einer Klebeverbindung oder einer Schweißverbindung, wie beispielsweise einer Ultraschallschweißverbindung, mit dem Deckel verbunden wird.

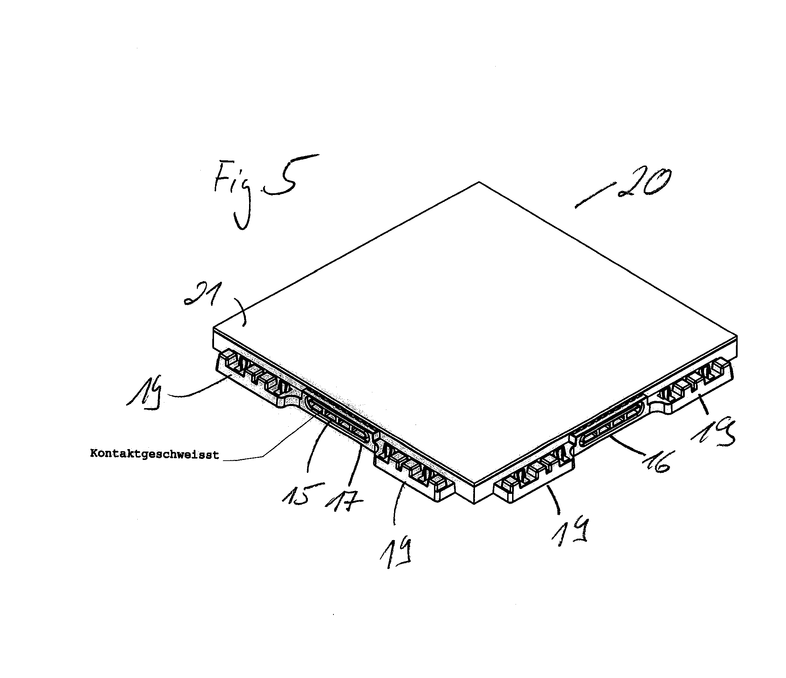

Ein weiteres Ausführungsbeispiel eines erfindungsgemäßen Flächenmoduls 20 ist in einer perspektivischen Darstellung in Figur 5 gezeigt. Das Flächenmodul 20 umfasst eine Einlassöffnung 15 und eine Auslassöffnung 16 für das Fluid sowie Verbindungsmittel 19 zur Verbindung mit benachbarten Flächenmodulen. Das Flächenmodul 20 weist zudem eine abnehmbare Dekorplatte 21 auf, die auf die Oberseite aufgeclipst ist, beispielsweise durch nicht gezeigte hervorstehende Rastzapfen und in dem Grundkörper ausgebildete Rastausnehmungen.

Um die Einlassöffnung 15 und die Auslassöffnung 16 sind Schweißbereiche 17 vorgesehen, die beim Verbinden oder nach dem Verbinden mit benachbarten Flächenmodulen mittels der Verbindungselemente 19 durch einen eingearbeiteten Heizdraht (nicht gezeigt) aufgeschmolzen werden, um sich mit den benachbarten Flächenmodulen stoffschlüssig zu verbinden.

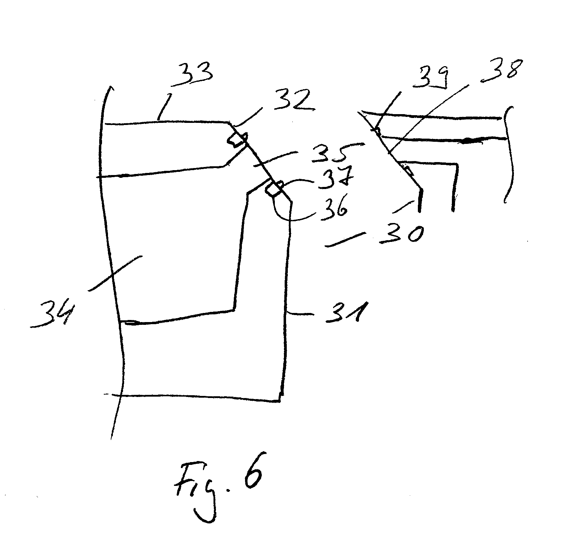

Die Figur 6 zeigt einen teilweisen Querschnitt durch ein weiteres Ausführungsbeispiel eines erfindungsgemäßen Flächenmoduls 30 mit einer senkrecht verlaufenden Stirnseite 31, einer teilweise schräg verlaufenden Stirnseite 32 und einer Oberseite 33. Der in dem Flächenmodul 30 ausgebildete Fluidkanal 34 steht in Verbindung mit einer Ein- und/oder Auslassöffnung 35, die im Bereich der schrägen Stirnseite 32 vorgesehen ist. Um die Einlass- und/oder Auslassöffnung 35 ist umlaufend ein Widerstandsheizdraht 36 eingelassen, der unterhalb einer hervorstehenden, ebenfalls um die Ein- und/oder Auslassöffnung 35 umlaufenden Schweißwulst 37 angeordnet ist. Ein benachbartes Flächenmodul 30 mit entsprechend komplementärer Stirnseite, welches im rechten oberen Teilbild gezeigt ist, weist ebenfalls eine Ein- und/oder Auslassöffnung 38 auf, die mit der Ein- und/oder Auslassöffnung 35 korrespondiert. Um die Ein- und/oder Auslassöffnung 38 ist eine Schweißnut 39 vorgesehen, die im zusammengefügten Zustand der Flächenmodule 30 an der Schweißwulst anliegt. Durch Beaufschlagen des elektrischen Widerstandsheizdrahts 36 mit Strom wird soviel Wärme erzeugt, dass die Schweißwulst 37 aufschmilzt und das Material in die Schweißnut 39 eindringen kann, um sich dort stoffschlüssig mit dem Material des benachbarten Flächenmoduls 30 zu verbinden, sodass eine um die Ein- und Auslassöffnungen 35 und 38 vorgesehene dichte stoffschlüssige Verbindung geben ist.

Anstelle der Schweißverbindung kann auch eine andersartige stoffschlüssige Verbindung, wie beispielsweise eine Klebeverbindung oder dergleichen vorgesehen sein.

Die entsprechenden Flächenmodule können zu großflächigen Wand-, Decken- oder Bodenverkleidungen in Gebäuden zusammengesetzt werden, die dann als entsprechende Flächenheizungen oder Flächenkühlsysteme Verwendung finden können. Insbesondere sind die erfindungsgemäßen Flächenmodule für die Nachrüstung einer Fußbodenheizung in Altbauten geeignet, bei denen beispielsweise schon eine Zentralheizung mit Heizkörpern vorliegt. Durch das flache Design der Flächenmodule mit einer sehr geringen Dicke der Flächenmodule lassen sich die Flächenmodule wie ein normaler Fußbodenbelag auf einen bestehenden Estrich auflegen und die Fluidleitung muss lediglich an der Stelle, an der der Zu-und Ablauf des früheren Heizkörpers vorgesehen war, mit entsprechenden Ein- und/oder Auslassöffnungen der Flächenanordnung verbunden werden, z.B. über eine Rohrverbindung oder eine Schlauchverbindung.

Ein derartiges System kann mit wenigen unterschiedlichen Flächenmodulen realisiert werden, so dass keine große Vorratshaltung an unterschiedlichen Bauteilen erforderlich ist. Insbesondere können die Flächenmodule bei Bedarf auch entsprechend zugeschnitten werden, wobei dann die Ein- und/oder Auslassöffnungen entsprechend verschlossen werden, so dass in dieses abgeschnittene Flächenmodul bei dem dann auch entsprechend die Fluidleitung an vielen Stellen durchtrennt sein kann, kein Fluid mehr eindringen kann. Entsprechend müssen benachbarte Flächenmodule so verlegt werden, dass eine Weiterleitung des Fluid möglich ist. Darüber hinaus können auch verschiedene Arten von Flächenmodulen mit unterschiedlicher Anordnung der Verbindungsmittel und der Ein- und/oder Auslassöffnungen vorgesehen werden, um auf verschiedene Anforderungen insbesondere im Randbereich großflächiger Heiz- und/oder Kühlsysteme ohne Abänderung von Flächenmodulen eingehen zu können.

Obwohl die vorliegende Erfindung anhand der beschriebenen Ausführungsbeispiele deutlich und detailliert beschrieben worden ist, ist für den Fachmann selbstverständlich, dass die Erfindung nicht auf diese Ausführungsform beschränkt ist, sondern dass vielmehr Abwandlungen möglich sind, wie beispielsweise in Form einer andersartigen Kombination der vorgestellten Merkmale als auch durch das Weglassen einzelner Merkmale, ohne den Schutzbereich der beigefügten Ansprüche zu verlassen.

## Patentansprüche

1. Flächenmodul mit einem plattenartigen Körper, bei dem die Länge und Breite zur Bildung einer Hauptfläche sehr viel größer ausgebildet ist als die der anderen Längserstreckung der Stirnseiten entsprechende Dicke, und wobei in dem Körper mindestens eine Leitung (3) zur Durchleitung eines Fluids ausgebildet ist, die sich entlang der Hauptfläche erstreckt,
**dadurch gekennzeichnet, dass**
das Flächenmodul an mindestens einer Stirnseite Verbindungsmittel (8,9) zum form-und/oder kraftschlüssigen Verbinden mit einem weiteren Flächenmodul aufweist.

2. Flächenmodul nach Anspruch 1,
**dadurch gekennzeichnet, dass**
das Flächenmodul an zwei, zwei benachbarten oder zwei gegenüber liegenden Stirnseiten oder jeder Stirnseite mit Verbindungsmitteln (8,9) zum form- und/oder kraftschlüssigen Verbinden mit einem weiteren Flächenmodul versehen ist und/oder zwei komplementäre Verbindungsmittel (8,9) zum form- und/oder kraftschlüssigen Verbinden mit weiteren Flächenmodulen an dem Flächenmodul angeordnet sind und/oder zwei komplementäre Verbindungsmittel an einer Seite des Flächenmoduls angeordnet sind und/oder Verbindungsmittel an gegenüberliegenden Seiten komplementär ausgebildet sind, so dass erste Verbindungsmittel (8) der ersten Seite eines Flächenmoduls in zweite Verbindungsmittel (9) der zweiten Seite eines anderen Flächenmoduls miteinander verbunden werden können und umgekehrt.

3. Flächenmodul nach einem der vorhergehenden Ansprüche,
**dadurch gekennzeichnet, dass**
die Verbindungsmittel Vorsprünge (8) und Aussparungen (9) mit oder ohne Hinterschneidungen und/oder Haken mit Aufnahmen und/oder elastische Spreizelemente mit oder ohne Hinterschneidungen und entsprechenden Aufnahmen umfasst und/oder die Verbindungsmittel so geformt sind, dass sie bei der Verbindung der Flächenmodule eine gegenseitige Anpresskraft erzeugen und/oder die Verbindungsmittel so geformt sind, dass sie bei der Herstellung einer formschlüssigen Verbindung eine durch elastische Verformung erzeugte Kraft bereitstellen, die in Richtung einer sich verstärkenden Verbindung der Flächenmodule wirkt und/oder die Verbindungsmittel gleichmäßig entlang und/oder über die gesamte Stirnseite verteilt angeordnet sind.

4. Flächenmodul nach einem der vorhergehenden Ansprüche,
**dadurch gekennzeichnet, dass**
die Fluidleitung (3) als mäanderförmige Schlange mit im Wesentlichen entlang der Stirnseiten ausgerichteten Leitungsrichtungen über die gesamte Hauptfläche ausgebildet ist und/oder die Fluidleitung an zwei gegenüber liegenden und/oder parallelen Stirnseiten und/oder aneinander grenzenden Stirnseiten eine Einlass- und/oder Auslassöffnung aufweist.

5. Flächenmodul nach Anspruch 4,
**dadurch gekennzeichnet, dass**
die Einlass- und/oder Auslassöffnung jeweils oder nur eine davon ein Dichtelement umfasst, welches bei der gegenseitigen Verbindung von Flächenmodulen seine Dichtwirkung erzeugt und/oder die Einlass- und/oder Auslassöffnung jeweils oder nur eine davon mit einer umlaufenden Aussparung versehen ist, in der ein elastisches Dichtelement angeordnet ist, welches über die Aussparung hervorsteht.

6. Flächenmodul nach Anspruch 5,
**dadurch gekennzeichnet, dass**
die Einlass- und/oder Auslassöffnung mit einer Vorrichtung zur Erzeugung einer umlaufenden stoffschlüssigen Verbindung versehen ist und/oder einem umlaufenden elektrischen Heizdraht und/oder eine Schweißwulst und/oder eine Schweißnut umfasst.

7. Flächenmodul nach einem der vorhergehenden Ansprüche,
**dadurch gekennzeichnet, dass**
das Flächenmodul an mindestens einer, zwei oder mehr, vier Seiten oder allen Seiten mit weiteren Flächenmodulen erweiterbar ist.

8. Flächenmodul nach einem der vorhergehenden Ansprüche,
**dadurch gekennzeichnet, dass**
die Stirnseiten zumindest teilweise in Richtung der Längs-, Breiten und/oder Dickenrichtung schräg oder unter einem Winkel von 30° bis 60° oder 45° zu der Oberseite des Flächenmoduls ausgebildet sind.

9. Flächenmodul nach einem der vorhergehenden Ansprüche,
**dadurch gekennzeichnet, dass**
das Flächenmodul rechteckig, quadratisch, dreieckig oder mehreckig in der Draufsicht auf eine Hauptfläche ist.

10. Flächenmodul nach einem der vorhergehenden Ansprüche,
**dadurch gekennzeichnet, dass**
die Dicke des Moduls kleiner oder gleich 5 cm, insbesondere kleiner oder gleich 2 cm, vorzugsweise kleiner oder gleich 1,5 cm, höchst vorzugsweise kleiner oder gleich 1 cm ist.

11. Flächenmodul nach einem der vorhergehenden Ansprüche,
**dadurch gekennzeichnet, dass**
das Flächenmodul zumindest zweiteilig mit einem Bodenkörper (2) und einem Deckel (1) ausgebildet ist und/oder der Bodenkörper und der Deckel stoffschlüssig miteinander verbunden sind und/oder der Bodenkörper und der Deckel verklebt, verschweißt, ultraschallverschweißt oder durch Reibschweißung verbunden sind und/oder der Bodenkörper mit einer nach einen Seite offenen Fluidleitung versehen ist.

12. Flächenmodul nach einem der vorhergehenden Ansprüche,
**dadurch gekennzeichnet, dass**
eine Hauptfläche ein Dekor aufweist und/oder das Flächenmodul eine Dekorplatte und/oder Mittel zum lösbaren Verbinden mit einer Dekorplatte umfasst

13. Flächenmodul nach einem der vorhergehenden Ansprüche,
**dadurch gekennzeichnet, dass**
das Flächenmodul oder Teile davon aus Metall, Aluminium, Stahl, Metalllegierungen, Aluminiumlegierungen, Stahllegierungen, Kunststoffe, Duroplaste, Polypropylen, Acrylbutadienstyrol, Melamin- oder Phenolharz getränkte Papiere oder Kombinationen davon gebildet ist.

14. System mehrerer Flächenmodule nach einem der vorhergehenden Ansprüche,
die zusammen zu einer Heiz- oder Kühlfläche verbunden werden können, wobei die Flächenmodule identisch und/oder unterschiedlich sind und/oder zwei, drei, vier oder mehr unterschiedliche Typen an Flächenmodulen vom System umfasst werden und/oder das System Randflächenmodule umfasst.

15. Verwendung der Flächenmodule nach einem der Ansprüche 1 bis 13 oder des Systems nach Anspruch 14, zur Bildung von Heiz- und/oder Kühlflächen an Wänden, Decken oder Böden von Gebäuden und/oder zur Nachrüstung von Fußbodenheizungen unter Nutzung des Anschlusses von Warmwasserheizkörpern.
